## Europäisches Patentamt

## European Patent Office

## Office européen des brevets

(19)

(11) Veröffentlichungsnummer: **0 134 476**
**B1**

(12)
# EUROPÄISCHE PATENTSCHRIFT

(45) Veröffentlichungstag der Patentschrift:
14.10.87

(21) Anmeldenummer: **84107828.0**

(22) Anmeldetag: **05.07.84**

(51) Int. Cl.⁴: **G 08 B 13/04,** G 08 B 13/20,
G 01 L 19/12

(54) **Druckempfindliche Sensoreinrichtung für einen Alarmsignalgeber.**

(30) Priorität: **12.03.84 DE 3408970**
**06.07.83 DE 3324396**

(43) Veröffentlichungstag der Anmeldung:
**20.03.85 Patentblatt 85/12**

(45) Bekanntmachung des Hinweises auf die Patenterteilung:
**14.10.87 Patentblatt 87/42**

(84) Benannte Vertragsstaaten:
**AT BE CH FR GB IT LI NL SE**

(56) Entgegenhaltungen:
**DE-A-1 913 782**
**DE-A-2 642 203**
**DE-A-2 940 674**
**FR-A-2 517 093**

(73) Patentinhaber: **Klink, Winfred, Steinsdorfstrasse 1a,**
**D-8000 München 22 (DE)**

(72) Erfinder: **Klink, Winfred, Steinsdorfstrasse 1a,**
**D-8000 München 22 (DE)**

(74) Vertreter: **Nöth, Heinz, Dipl.- Phys., Patentanwalt**
**Müllerstrasse 1, D-8000 München 5 (DE)**

## Beschreibung

Die Erfindung betrifft eine druckempfindliche Sensoreinrichtung nach dem Oberbegriff des Anspruchs 1.

Eine derartige druckempfindliche Sensoreinrichtung für einen Einbruchsmelder, insbesondere für Fenster, ist aus der DE-OS 19 13 782 bekannt. Der durch Druckänderung auslenkbare Körper ist gebildet durch eine als Wellrohrmembran ausgebildete Membran, die einen Druckraum umfaßt, der über ein Kupferrohr mit dem Zwischenraum von Doppelscheiben eines Fensters verbunden ist. Die Membran ist mit einem beweglichen Kontakt ausgestattet, der zwischen zwei feststehenden Kontakten beweglich ist. Der eine feststehende Kontakt befindet sich im Druckraum, der von der Membran umfaßt ist, und der andere feststehende Kontakt liegt außerhalb des Druckraums. Diese drei Kontakte bilden einen Kontaktgeber, der die Abgabe eines Alarmsignals veranlassen kann. Die Gesamtanordnung, d.h. die drei Kontakte des Kontaktgebers und die wellrohrförmige Membran sind in einem weiteren luftdichten Glasgehäuse angeordnet, in welchem ein tieferer Unterdruck herrscht als im von der Membran umfaßten Druckraum, welcher mit dem Zwischenraum der Doppelscheiben verbunden ist. Bei einer Druckänderung im Zwischenraum wirkt sich diese so aus, daß der bewegliche Kontakt durch die Auslenkung der Membran mit einem der beiden feststehenden Kontakte des Kontaktgebers in Berührung gebracht wird, wodurch das Alarmsignal ausgelöst wird.

Die Empfindlichkeit des bekannten Einbruchsmelders hängt u.a. wesentlich vom Abstand der beweglichen Elektroden von den festen Elektroden ab. Ist dieser Abstand relativ groß bemessen, hat der bekannte Einbruchsmelder eine relativ niedrige Empfindlichkeit, d.h. man benötigt einen relativ hohen Druckanstieg im Zwischenraum zwischen den Doppelscheiben, damit eine entsprechende Membranauslenkung zum Anlegen des beweglichen Kontaktes an einen der beiden feststehenden Kontakte führt. Auch ist es erforderlich, einen bestimmten Abstand der feststehenden Kontakte vom beweglichen Kontakt vorzusehen, um relativ langsam vor sich gehende Druckänderungen im Zwischenraum zwischen den Doppelscheiben, die sich aufgrund von Temperaturunterschieden oder sonstigen Temperatureinflüssen, wie Eindruck und dgl., ergeben, zuzulassen. Allerdings wird hierdurch die Empfindlichkeit der Sensoreinrichtung gemindert. Es ist dann nämlich die Möglichkeit gegeben, daß bei einem Einbruch nach Beschädigung einer der Doppelscheiben die Öffnung, mit der das Verbindungsrohr für den Druckraum im Innern der wellrohrförmigen Membran an den Zwischenraum zwischen den Doppelscheiben angeschlossen ist, rasch verstopft wird, so daß die geringe, bis zum Verstopfen erfolgte Druckänderung sich auf den Druckraum im Innern der wellrohrförmigen Membran nicht auswirkt und damit der bewegliche Kontakt sich nicht bis zu einem der feststehenden Kontakte bewegt.

Dies trifft auch auf die aus der deutschen Offenlegungsschrift 26 42 203 und der deutschen Gebrauchsmusterschrift 1 718 088 bekannten Sicherheitseinrichtungen zur Sicherung von Fenstern und Türen gegen Einbruch zu, bei denen sich die Druckänderung im Zwischenraum zwischen den Doppelfenstern auf eine Druckmeßdose auswirkt, welche dabei elektrische Kontakte miteinander für die Abgabe des Alarmsignals in Berührung bringt.

Aufgabe der Erfindung ist es demgegenüber, eine druckempfindliche Sensoreinrichtung der eingangs genannten Art zu schaffen, bei der langsame Druckänderungen durch Temperatur- oder sonstige Witterungseinflüsse ausgeglichen werden und dabei trotzdem gleichzeitig eine hohe Empfindlichkeit erzielt wird.

Diese Aufgabe wird erfindungsgemäß durch die kennzeichnenden Merkmale des Anspruchs 1 gelöst.

Dadurch, daß ein Druckausgleich zwischen den beiden Druckkammern des Druckraums stattfindet, wird erreicht, daß bei langsam vor sich gehenden Druckänderungen im Zwischenraum zwischen den Doppelscheiben aufgrund von Witterungseinflussen, insbesondere von Temperaturunterschieden bei Tag und bei Nacht, in den beiden Druckkammern immer der gleiche Druck herrscht, so daß die Membran bzw. der bewegliche Kontakt des im Druckraum angeordneten Kontaktgebers nicht betätigt wird. Andererseits reagiert der bewegliche Kontakt bereits auf geringfügige Druckänderungen, wenn diese stoßweise erfolgen. Solche stoßweise geringfügige Änderungen in der Größenordnung von 4 bis 10 mbar (400 bis 1000 Pa) ergeben sich zwangsläufig auch bei geschickt manipulierter Beschädigung einer der Doppelscheiben, bevor ein Verstopfen der Verbindung zwischen dem Druckraum in der Sensoreinrichtung und denn zu überwachenden Zwischenraum zwischen den Doppelscheiben möglich ist.

Bei einem langsamen Druckanstieg nach Beschädigen einer der Doppelscheiben, beispielsweise durch Ausschäumen des Zwischenraums zwischen den Doppelscheiben, wird der zweite Kontaktgeber zur Betätigung gebracht, welcher durch den den Druckraum abdeckenden auslenkbaren Körper bzw. die Membran betätigt wird.

Die Sensoreinrichtung trägt daher allen bei Einbrüchen möglicherweise auftretenden Druckänderungen im Zwischenraum zwischen den Doppelscheiben Rechnung, so daß eine zuverlässige Abgabe des Alarmsignals erzielt wird.

In vorteilhafter Weise kann ein Gasreservoir, insbesondere in Form eines Luftsackes, vorgesehen sein, der mit fabriktrockener Lüft gefüllt ist, mit der der Druckraum bzw. die beiden Druckkammern der Sensoreinrichtung beaufschlagt sind. Dieses Gasreservoir ist bevorzugt über ein Sperrventil an den Zwischenraum der Doppelscheiben angeschlossen und dient auch zum Beliefern des Zwischenraums mit fabriktrockener Luft. Auf diese Weise wird ein Anlaufen der Innenseiten der Doppelscheiben verhindert.

Dieses Sperrventil kann in vorteilhafter Weise so ausgestaltet sein, daß es einen Druckausgleichskanal aufnimmt, über welchen der allmählich stattfindende Druckausgleich zwischen den beiden Druckkammern der Sensoreinrichtung erfolgt. Dieser Druckausgleichskanal kann natürlich auch in der Gehäusewand, welche die beiden Druckkammern der Sensoreinrichtung umfaßt, vorgesehen sein und die Trennmembran überbrücken. Ferner ist es natürlich auch möglich, die Trennmembran selbst aus einem Material herzustellen, das einen allmählichen Gasdurchtritt und damit Druckausgleich zwischen den beiden Druckkammern ermöglicht.

Dieser allmähliche Druckausgleich kann auch dadurch erzielt werden, daß der bewegliche Kontakt in der Druckkammer in einer kanalförmigen Kontaktführung geführt wird, die an ihrem einen Ende luftdicht verschlossen ist und zwischen dem Umfang des beweglichen Kontaktkörpers und der Innenwand der kanalförmigen Kontaktführung ein Durchtrittsspalt verbleibt für den allmählichen Druckausgleich. Dabei wird die eine Druckkammer gebildet zwischen dem verschlossenen Ende der kanalförmigen Kontaktführung und dem beweglichen Kontaktkörper und die andere Druckkarmer im übrigen Bereich des Druckraums in der Sensoreinrichtung.

In vorteilhafter Weise können zur Empfindlichkeitseinstellung die im Betrieb feststehenden Kontakte des ersten, im Gehäuse angeordneten Kontaktgebers und/oder die im Betrieb feststehenden Kontakte des zweiten Kontaktgebers verstellbar sein. Durch die Verstellbarkeit werden die Abstände dieser feststehenden Kontakte vom beweglichen Kontakt verändert. In Verbindung mit dem einstellbaren Druck, sowohl im zu überwachenden Raum als auch im Druckraum der Sensoreinrichtung, läßt sich hierdurch in Abhängigkeit von den jeweiligen Anwendungsfällen bei jedem Einbau der Sensoreinrichtung eine optimale Einstellung der Sensoreinrichtung auf die vorhandenen Gegebenheiten und Anforderungen erzielen.

Die Erfindung findet bevorzugt Verwendung bei einer Alarmanlage zur Sicherung eines Mehrscheibenfensters, insbesondere Doppelscheibenfensters.

Bei einer z. B. aus der DE-OS 1 913 782 bekannten Alarmanlage wird der Scheibeninnenraum über eine Gasleitung mit einer Betätigungseinrichtung für eine Alarmanlage verbunden. Die Betätigungseinrichtung ist mit einer bei Druckänderung im Scheibeninnenraum auslenkbaren Membran versehen, durch die Kontakte in elektrisch leitende Verbindungen gebracht werden, so daß die Alarm- oder Signalvorrichtung in Tätigkeit versetzt wird.

Das Verbindungsrohr zwischen der Betätigungseinrichtung und dem Scheibeninnenraum ragt in eine Öffnung des als Bleiverschweißung ausgebildeten Scheibenverbindungsrahmens. Diese Öffnung ist durch die Scheiben des Fensters sichtbar. Bei Beschädigung einer der Scheiben wird die Druckänderung im Scheibeninnenraum über die Gasleitung an die Betätigungseinrichtung mit Zeitverzögerung weitergegeben. Zur Betätigung der Druckmembran muß eine relativ große Druckänderung auf diese einwirken, um beispielsweise allein durch Erschütterungen auf die Fensterscheibe wirkenden Winddruck und sonstige Erschütterungen ein nicht gewolltes Auslösen der Betätigungseinrichtung zu verhindern. Bei der bekannten Alarmanlage besteht daher die Möglichkeit, daß nach Beschädigung einer Scheibe die Öffnung im Scheibenverbindungsrahmen, in die die Gasleitung mündet und welche von außen ohne weiteres wahrgenommen werden kann, verstopft wird, so daß die Druckänderung an die Betätigungseinrichtung nicht weitergegeben wird. Das heißt, die bekannte Alarmanlage läßt sich leicht außer Betrieb setzen.

Das gilt auch für die aus der deutschen Gebrauchsmusterschrift 1 718 088 bekannte Sicherungseinrichtung, bei der im Scheiben innenraum sichtbar von außen ein manometrischer Impulsgeber, beispielsweise eine mit Alarmkontakten versehene Druckmeßdose, angeordnet ist.

Auch bei der aus der DE-OS 26 42 203 bekannten Sicherheitseinrichtung befindet sich eine Druckmeßdose mit elektrischen Kontakten im Scheibeninnenraum. Diese Druckmeßdose kann sich auch außerhalb des Scheibeninnenraums befinden und ist dann jedoch über Verbindungsöffnungen im Scheibenverbindungsrahmen, welche von außen ohne weiteres erkennbar sind, mit dem Scheibeninnenraum druckdicht verbunden. Auch bei dieser Alarmanlage lassen sich die Verbindungsöffnungen ohne weiteres abdecken, noch bevor sich die Druckänderung über die Verbindungsöffnungen in dem Maße an der Druckmeßdose ausgewirkt hat, daß diese betätigt wird.

Dadurch, daß sich im Scheibeninnenraum entlang dem Scheibenverbindungsrahmen im Abstand zu diesem eine Abdeckschiene erstreckt, deren Seitenkanten einen Abstand zu den Scheiben und/oder die mehrere Öffnungen aufweist, wird eine Alarmanlage geschaffen, beider es nicht möglich ist, die Alarmanlage außer Betrieb zu setzen durch Verstopfen der Öffnungen, über welche der Scheibeninnenraurn mit der Betätigungseinrichtung gasdicht verbunden ist.

Durch die Abdeckschiene, welche sich entlang dem Scheibenverbindungsrahmen im Scheibeninnenraum erstreckt, wird ein Erkennen der Lage der Öffnungen, über welche die Betätigungseinrichtung für die Alarm- und/oder Signalvorrichtung mit dem Scheibeninnenraum verbunden ist, unmöglich gemacht. Ein Einbrecher kann daher diese Öffnungen nicht verstopfen. Dadurch, daß die Abdeckschiene einen Abstand gegenüber dem Scheibenverbindungsrahmen aufweist, sowie dadurch, daß die Seitenkanten der Abdeckschiene und/oder die Abdeckschiene mehrere Öffnungen aufweist, wird gewährleistet, daß der im Scheibeninnenraum herrschende Druck auch hinter der Abdeckschiene vorhanden ist und somit über die Öffnungen im Scheibenverbindungsrahmen an der Betätigungseinrichtung anliegt. Das gleiche gilt auch für Druckänderungen im Scheibeninnenraum, insbesondere bei Beschädigung einer der Scheiben. Der Druckunterschied wird sich über die von der Abdeckschiene abgedeckten Öffnungen ohne weiteres auf die Betätigungseinrichtung fortpflanzen, ohne daß vorher ein Abdecken der Öffnungen möglich ist.

Eine relativ massive und starre Ausbildung der Abdeckschiene läßt sich dadurch erzielen, daß die Abdeckschiene als gelochtes Rohr, das den Scheibeninnenraum umfaßt und am Scheibenverbindungsrahmen anliegt, ausgebildet ist.

Die Öffnungen in der Abdeckschiene bzw. in dem gelochten Rohr können als runde Öffnungen oder als Langlöcher ausgebildet sein. Das Abdeckrohr kann dabei an der Innenfläche des Scheibenverbindungsrahmens und an den beiden Innenflächen der Scheiben anliegen.

Die Öffnungen in der Abdeckschiene bzw. im gelochten Rohr sowie die Abstände der Abdeckschiene vom Scheibenverbindungsrahmen und von den Scheiben sind so bemessen, daß Druckänderungen möglichst rasch an die Betätigungseinrichtung weitergeleitet werden, ohne daß dabei die Abdeckfunktion der Abdeckschiene verlorengeht.

Die druckempfindliche Sensoreinrichtung nach der Erfindung ist jedoch nicht nur auf dem Gebiet der Einbruchsicherung von Fenstern, Türen und dgl. einsetzbar, sondern beispielsweise auch als Sensoreinrichtung bei Feuermeldern unter Ausnützung des Druckanstiegs der durch Feuer erhitzten Raumluft.

Anhand der beiliegenden Figuren, welche Ausführungsbeispiele darstellen, wird die Erfindung noch näher erläutert. Es zeigt:

Fig. 1 ein erstes Ausführungsbeispiel;

Fig. 2 ein zweites Ausführungsbeispiel;

Fig. 3 ein Ausführungsbeispiel für ein Gehäuse;

Fig. 4 ein Ausführungsbeispiel für eine Membranhalterung;

Fig. 5 ein Ausführungsbeispiel für verstellbare Kontakte;

Fig. 6 ein Ausführungsbeispiel für ein Gasreservoir;

Fig. 7 in perspektivischer Darstellung einen Teilausschnitt aus einem ersten Ausführungsbeispiel für ein Doppelscheibenfenster;

Fig. 8 in gleicher perspektivischer Darstellung ein weiteres Ausführungsbeispiel für ein Doppelscheibenfenster;

Fig. 9 einen Schnitt durch das Ausführungsbeispiel der Fig. 7 und

Fig. 10 einen Schnitt durch das Ausführungsbeispiel der Fig. 8.

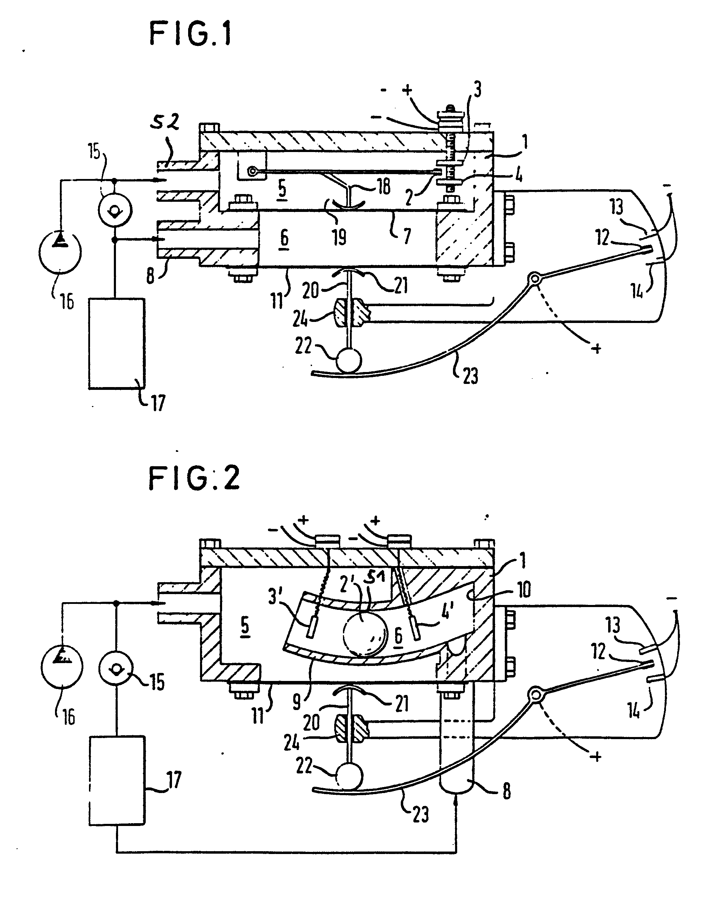

Beim ersten Ausführungsbeispiel (Fig. 1) wird von einem Gehäuse 1 ein Druckraum, der gebildet ist aus den beiden Druckkammern 5 und 6, umschlossen. Ein Teil der Umhüllung des Druckraumes bildet dabei eine Membran 11, die druckdicht am Gehäuse 1 befestigt bzw. eingespannt ist. Der Druckraum im Innern des Gehäuses 1 ist durch eine Trennmembran 7 unterteilt in die beiden Druckkammern 5 und 6. In diesen beiden Druckkammern herrscht im wesentlichen der gleiche Druck.

Bei dem in der Fig. 1 dargestellten Ausführungsbeispiel der druckempfindlichen Sensoreinrichtung wird ein beweglicher Kontakt 2, der als Kontaktarm ausgebildet ist, dessen eines Ende am Gehäuse schwenkbar gelagert ist, betätigt durch die Trennmembran 7. Der Kontakt 2 besitzt einen abstehenden Abgriffschenkel 18, der mit einem rundkopfartigen Fußteil 19 an der Trennmembran 7 anliegt, um eine möglichst reibungsfreie Übertragung der Bewegungen der Trennmembran auf den beweglichen Kontaktarm 2 zu erzielen. Der in der Druckkammer 5 angeordnete bewegliche Kontaktarm 2 befindet sich zwischen zwei feststehenden Kontakten 3 und 4, die mit dem beweglichen Kontakt 2 einen erst elektrischen Kontaktgeber bilden. Die Kontakte 3 und 4 sind als Doppelkontakt ausgebildet, wobei die beiden Kontaktstücke des Doppelkontaktes unterschiedliche Polaritäten aufweisen und durch gleichzeitiges Berühren der beiden Kontaktstücke eines jeden Doppelkontaktes ein Stromkreis geschlossen wird, durch den die Abgabe des Alarmsignals ausgelöst wird. Es ist jedoch auch möglich, daß der bewegliche Kontaktarm 2 selbst Teil eines Stromkreises ist und eine zu den beiden Kontakten 3 und 4 unterschiedliche Polarität aufweist, so daß jeweils dann, wenn der bewegliche Kontaktarm 2 an einem der Kontakte 3 und 4 anliegt, der Stromkreis zur Abgabe des Alarmsignals geschlossen ist.

Es ist natürlich möglich, den Kontaktgeber auch andersartig auszubilden, beispielsweise so, daß der bewegliche Kontakt 2 sich direkt, beispielsweise in Form eines Metallplättchens oder einer Aufdampfschicht, auf der Fläche der Trennmembran 7 befindet und beim Bewegen der Trennmembran infolge einer kurzzeitigen bzw. stoßweisen Druckänderung in der Druckkammer 6 mit einem der feststehenden Kontakte in Berührung gebracht wird.

Ein zweiter elektrischer Kontaktgeber 12, 13, 14 zur Abgabe des Alarmsignals wird betätigt durch Auslenkung der Membran 11, welche zur Abdeckung des Druckraums im Gehäuse 1 dient und Bestandteil dieses Gehäuses ist. Dieser Kontaktgeber befindet sich außerhalb des Gehäuses 1 und besitzt einen beweglichen Kontakt 12, der schwenkbar an der Außenseite des Gehäuses 1 an seinem einen Ende gelagert ist. Das freie Ende ist beweglich zwischen zwei feststehenden Kontakten 13 und 14, die in der gleichen Weise ausgebildet sein können wie die Kontakte 3 und 4.

Die Auslenkungen der Membran 11 werden übertragen über einen Stab 20, der an seinem einen Ende eine rundkupfartige Verbreiterung 21 besitzt, die möglichst reibungsfrei an der Membran 11 anliegt. Am anderen Ende besitzt der Stab 20 ebenfalls eine Rundung 22, welche auf der gebogenen Fläche eines Übertragungshebels 23 aufliegt. Ferner ist eine Führung 24 für eine Stabbewegung in Richtung seiner Längsachse vorgesehen.

Wie ferner aus der Fig. 1 zu ersehen ist, ist die Druckkammer 5 an ein Gasreservoir 16, welches vorzugsweise als Luftsack ausgebildet ist, angeschlossen (Anschlußstutzen 52). Dieser Luftsack enthält getrocknete Luft, mit der über ein Sperrventil 15 die beiden Druckkammern 5 und 6 der dargestellten Sensoreinrichtung sowie ein zu überwachender Raum 17, insbesondere der Zwischenraum zwischen den Doppelscheiben eines Fensters, mit Luft beschickt werden kann, so daß in diesen Räumen der gewünschte Druck vorhanden ist. Nach der entsprechenden Druckeinstellung (Über- oder Unterdruck gegenüber der Umgebung) wird das Sperrventil 15 geschlossen, so daß die Druckkammer 6 an den zu überwachenden Raum 17 und die Druckkammer 5 an das Gasreservoir 16 angeschlossen sind. Beim dargestellten Ausführungsbeispiel befindet sich im Absperrventil 15, wenn dieses sich in der Absperrstellung befindet, ein Druckausgleichskanal in einer solchen Stellung, daß dieser für einen allmählichen Druckausgleich zwischen den beiden Druckkammern 5 und 6 der Sensoreinrichtung und auch im Gasreservoir 16 sowie dem zu überwachenden Raum 17 bei langsam sich einstellenden Druckunterschieden infolge von Witterungseinflüssen sorgen kann.

Wenn im zu überwachenden Gasraum 17 eine rasche Druckänderung geringen Ausmaßes stattfindet, beispielsweise infolge einer vorsichtigen Zerstörung einer der beiden Doppelscheiben eines Fensters, wird die Trennmembran 7, je nachdem, ob im zu überwachenden Raum 17 und in den beiden Druckkammern 5 und 6 gegenüber der Umgebung Unterdruck oder Überdruck herrscht, die Trennmembran 7 nach oben oder unten bewegt. Diese Bewegung wird übertragen auf den beweglichen Kontaktarm 2, welcher bei seiner Bewegung mit einem der beiden Kontakte 3 und 4 in Berührung kommt und so einen Stromkreis zur Abgabe des Alarmsignals schließt. Dieser Kontaktgeber kann bereits auf geringste kurzzeitig (stoßweise) erfolgende Druckänderungen in der Größenordnung von 4 bis 10 mBar (400 bis 1000 Pa) betätigt werden.

Gleichzeitig erfolgt auch eine Betätigung des außerhalb des Gehäuses 1 befindlichen Kontaktgebers, der im wesentlichen aus dem schwenkbaren Kontaktarm 12 und den festen Kontakten 13 und 14 besteht. Der Abgriffschenkel 18 und der Abtaststab 20 der beiden Kontaktgeber können durch gering bemessene Federkräfte gegen die Oberflächen der Membranen 7 und 11 angedrückt sein, so daß eine sichere Weitergabe der Membranbewegungen auf die beweglichen Kontakte 2 und 12 der beiden Kontaktgeber gewährleistet ist.

Durch den ersten aus dem beweglichen Kontakt 12 und den beiden festen Kontakten 13 und 14 bestehenden Kontaktgeber können auch langsam vor sich gehende Druckänderungen im zu überwachenden Raum 17 erfaßt werden. Es wird dadurch die Auslenkung der Membran 11 nach innen oder außen verändert und dies wird übertragen von der Abtasteinrichtung (Abtaststab 20, rundkopfartige Verbreiterung 21, Rundung 22) über den Betätigungshebel 23 auf den beweglichen schwenkbaren Kontaktarm 12, bis dieser einen der beiden feststehenden Kontakte berührt, wodurch der Stromkreis in der vor stehend beschriebenen Weise geschlossen wird.

Durch Einstellung des Abstands der festen Kontakte 3 und 4 bzw. 13 und 14 vom beweglichen Kontakt 2 bzw. 12 läßt sich die Empfindlichkeit der Sensoreinrichtung festlegen.

Auch läßt sich der Kontaktgeber 12, 13, 14 als Druckmeßgerät einsetzen, durch den der Fülldruck im System, insbesondere im Innern des Gehäuses 1 gemessen entsprechend eingestellt werden kann.

Beim Ausführungsbeispiel der Fig. 2 besitzt der im Innern des Gehäuses 1 angeordnete Kontaktgeber als beweglichen Kontakt 2' einen Wälzkörper, der aus einer leichten Masse, z. B. Schaumstoff, besteht, dessen Umfang metallisiert ist. Dieser Wälzkörper, welcher als Kugel, Walze, Tonne oder dgl. ausgebildet sein kann, ist in einer kanalartigen Kontaktführung 9 angeordnet, welche gebogen ausgebildet ist. In die kanalartige Kontaktführung 9 ragen fest stehende Kontakte 3' und 4', welche zusammen mit dem beweglichen Kontakt 2' in der gleichen Weise wirken wie der aus dem beweglichen Kontakt 2 und den festen Kontakten 3 und 4 bestehende erste Kontaktgeber des ersten Ausführungsbeispiels.

Die kanalförmige Kontaktführung 9 ist an einem Kanalende 10 luftdicht verschlossen. Das andere Kanalende ist in das Innere des Gehäuses, welches die eine Druckkammer 5 bildet, geöffnet. Der Raum zwischen dem beweglichen Kontaktkörper 2' und dem luftdicht verschlossenen Kanalende 10 bildet die andere Druckkammer 6. In diese mündet ein Anschlußstutzen 8, über den der zu überwachende Raum 17 an die Druckkammer 6 angeschlossen ist. In das Gehäuseinnere bzw. die Druckkammer 5 ist das Gasreservoir 16 angeschlossen, wobei wie beim ersten Ausführungsbeispiel eine Befüllung des zu überwachenden Raums 17, welcher ein Zwischenraum zwischen den Doppelscheiben eines Fensters sein kann, und der Druckkammer 5 und 6 bei geöffnetem Sperrventil 15 erfolgen kann.

Der allmähliche Druckausgleich zwischen der Druckkammer 5 und 6 wird dadurch erzielt, daß der Durchmesser des beweglichen Kontaktkörpers 2' etwas geringer bemessen ist als der Durchmesser der dieser umschließenden Innenwand der kanalförmigen Kontaktführung 9 (Luftdurchtrittsspalt 51). Hierdurch wird auch eine leichtgängige Bewegung des Kontaktkörpers 2' in der Kontaktführung 9 gewährleistet.

Wenn eine Druckänderung im zu überwachenden Raum 17 bei abgesperrtem Absperrventil 15 erfolgt, bewegt sich der bewegliche Kontaktkörper 2' in der gebogenen kanalförmigen Kontaktführung 9 nach links oder rechts, bis zu einem der feststehenden Kontakte 3' und 4' und schließt dabei zur Abgabe des Alarmsignals einen Stromkreis.

Die Arbeitsweise des außerhalb des Gehäuses 1 angeordneten Kontaktgebers 12, 13, 14 ist die gleiche wie beim Ausführungsbeispiel der Fig. 1.

In den nicht näher dargestellten Stromkreisen, welche die Abgabe des Alarmsignals auslosen, können in vorteilhafter Weise auch Magnetrelais verwendet werden, die äußerst unempfindlich sind. Es erübrigt sich daher, bei der Erfindung eine empfindliche Elektronik zu verwenden.

Anstelle der Kontaktgeber können auch elektrooptische Abtasteinrichtungen vorhanden sein, bei denen in Abhängigkeit von den Druckänderungen in den Druckkammern 5 und 6 bzw. der Membranbewegungen bewegliche Körper in den Lichtstrahl beispielsweise einer Photozelle gebracht werden, wodurch dann das Alarmsignal ausgelöst wird.

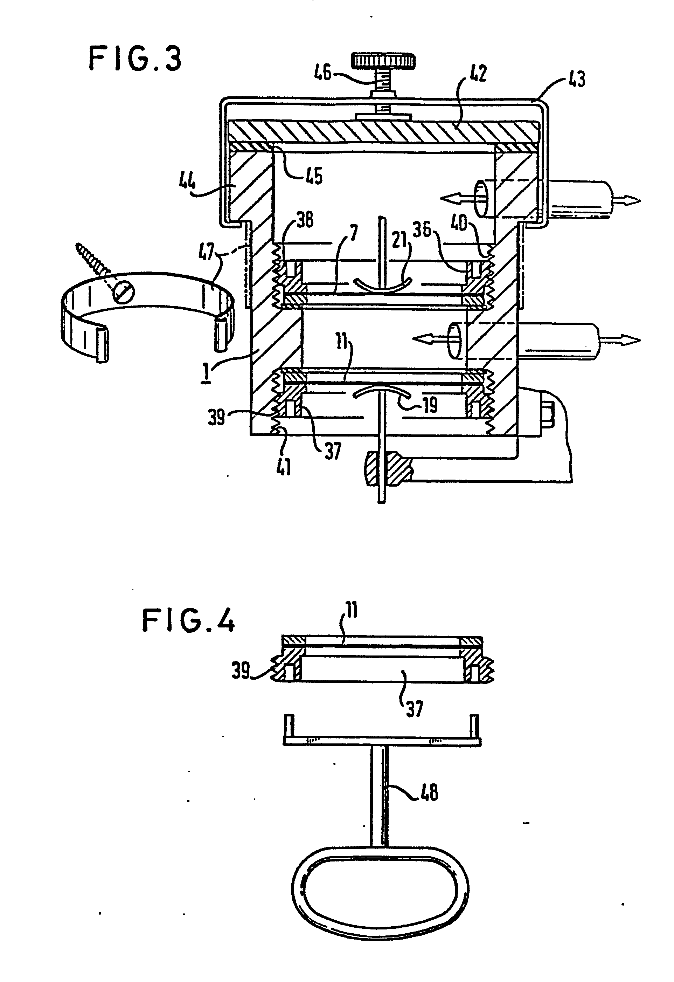

Bei der in den Fig. 3 und 4 dargestellten Gehäuseausgestaltung für die Sensoreinrichtung wird eine einfache Abdeckung des Gehäuses sowie eine leichte Auswechselbarkeit der Membranen er reicht. Als Gehäuseverschluß dient ein Deckel 42, der mit Hilfe eines Klemmbügels 43, welcher am Gehäuse 1 an einem umlaufenden Gehäusevorsprung 44 angreift, unter Zwischenlage einer Dichtung 45 aufgedrückt wird. Hierbei kann noch eine am Klemmbügel 43 geführte Andruckschraube 46 vorgesehen sein, welche beim Einschrauben auf den Deckel 42 drückt und diesen fest auf die auf dem oberen Gehäuserand liegende Dichtung 45 aufpreßt. Der Vorsprung 44, in welchen der Klemmbügel 43 eingreift, kann ferner als Auflageschulter für eine das Gehäuse 1 umfassende Halterung 47 dienen.

Das Gehäuse ist zylindrisch ausgebildet und die Membranen 7 und 11 werden in ringförmigen Membranhalterungen 36, 37 gehalten. Hierbei können die Membranen 7 und 11 zwischen ringförmigen Halterungsteilen geklebt sein. Die Membranhalterungen 36 und 37, von denen die Membranhalterung 37 in der Fig. 4 im ausgebauten Zustand gezeigt ist, besitzen Außengewinde 38, 39, die in entsprechenden Innengewinden 40, 41 des Gehäuses 1 einschraubbar sind, wie das insbesondere aus Fig. 3 zu ersehen ist. Zum erleichterten Einsetzen bzw. Einschrauben der Membranhalterungen 36, 37 kann ein Montageschlüssel 48 dienen, der zwei Stifte aufweist, die in entsprechende Bohrungen der Membranhalterungen 36, 37 zum Verschrauben desselben einsetzbar sind, wie das aus Fig. 4 zu ersehen ist.

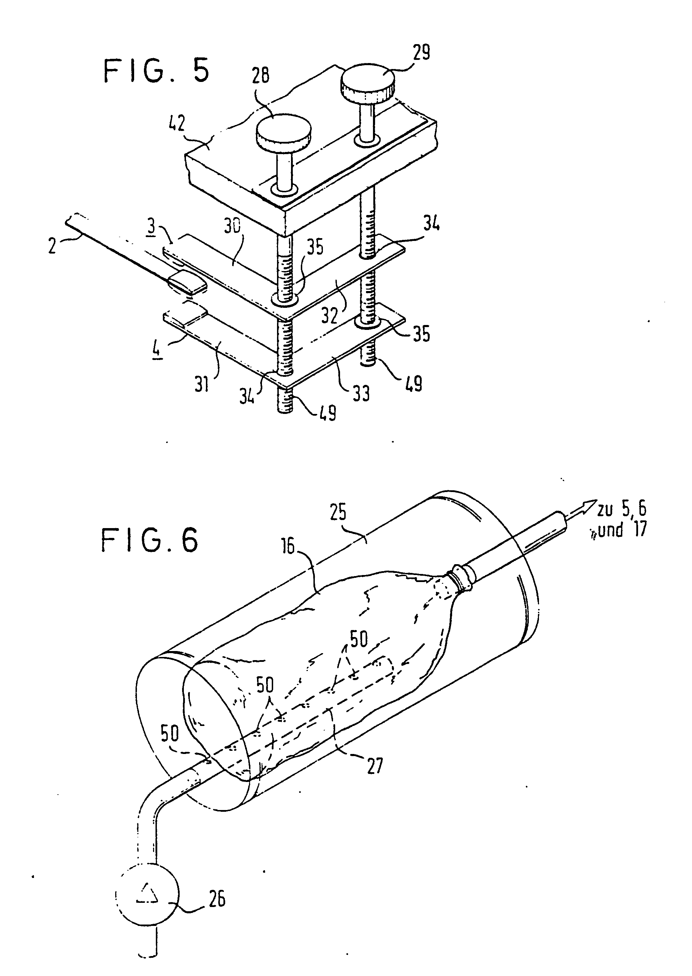

In der Fig. 5 ist ein Ausführungsbeispiel des zweiten Kontaktgebers 2, 3, 4 dargestellt. Bei diesem Kontaktgeber sind die im Betrieb feststehenden Kontakte 3, 4 in ihren Abstanden zum beweglichen Kontakt 2 verstellbar ausgebildet. Die beiden Kontakte 3 und 4 sind als L-förmige Streifen geformt und besitzen in Gewindehülsen 35 Innengewinde, in die die Gewinde 49 von Verstellschrauben 28, 29 eingreifen. Ferner besitzen die L-förmigen Kontaktstreifen der Kontakte 3 und 4 Führungsbohrungen 34, welche mit den Gewinden 49 der Verstellschrauben 28, 29 nicht in Eingriff stehen. Die Gewindehülsen 35 und Führungsbohrungen 34 befinden sich an Führungsschenkeln 32, 33, während die anderen Schenkel der Kontakte 3 und 4 als Kontaktschenkel 30 und 31 ausgebildet sind. Beim Drehen der Schrauben 28 und 29 wird der jeweilige L-förmige Kontakt 3 bzw. 4 in Richtung der Schraubenachse, d.h. beim dargestellten Ausführungsbeispiel nach oben oder unten, verstellt, wodurch sowohl der Abstand der beiden Kontakte 3 und 4 voneinander als auch der jeweilige Abstand der Kontakte 3 und 4 vom beweglichen Kontakt 2 verändert wird. Die Verstellschrauben 28 und 29 sind abgedichtet im Deckel 42 des Gehäuses geführt.

Es ist natürlich auch möglich beide Kontakte 3 und 4 mittels einer Verstellschraube zu verstellen, wobei dann diese ein Links- und ein Rechtsgewinde aufweist und der eine Kontakt mit einem Innengewinde auf dem Rechtsgewinde und der andere Kontakt mit einem Innengewinde auf dem Linksgewinde aufsitzt. Beim Drehen der Verstellschraube werden dann die beiden Kontakte aufeinander zu oder voneinander weg bewegt, wobei der bewegliche Kontakt 2 sich zwischen den beiden verstellbaren Kontakten befindet.

Die Fig. 6 zeigt ein Ausführungsbeispiel für das Gasreservoir 16, wobei dieses als Luftsack ausgebildet ist und sich in einem Druckbehälter 25 befindet. Der Druck im Druckbehälter kann über ein Steuerventil 26 verändert werden. Zur Druckänderung kann beispielsweise Luft in den Luftbehälter eingebracht oder aus diesem entfernt werden. Hierzu dient ein in den Druckbehälter 25 ragendes gelochtes Rohr 27, das entlang seiner Längsausdehnung Öffnungen 50 besitzt. Hierdurch wird vermieden, daß z. B. beim Entfernen von Luft aus dem Druckbehälter 25 durch den sich anlegenden Sack 16 alle Luftöffnungen verstopft werden. Es ist hierdurch gewährleistet, daß die Druckkammer 5 und 6 in der Sensoreinrichtung sowie der zu überwachende Raum 17, je nachdem der Druck im Druckbehälter 25 geändert wird, durch die im Sack 16 befindliche trockene Fabrikluft beaufschlagt wird.

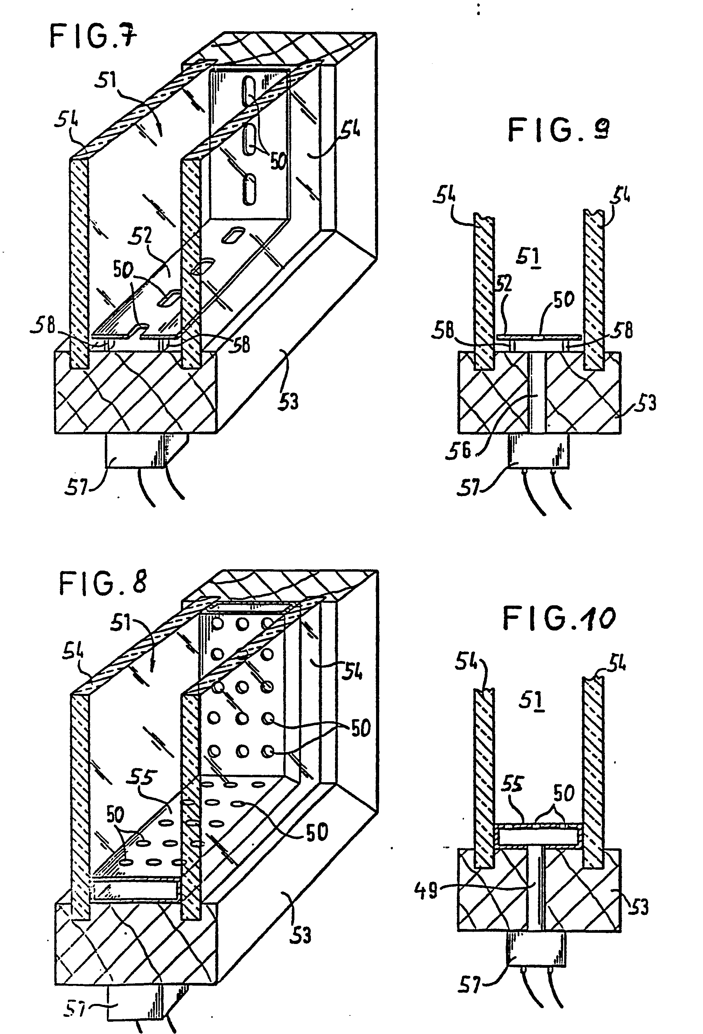

Die in Figuren 7 und 9 dargestellte Alarmanlage zur Sicherung eines Doppelscheibenfensters besitzt zwischen zwei Scheiben 54, welche gasdicht mittels eines umlaufenden Scheibenverbindungsrahmens 53 miteinander verbunden sind, einen Scheibeninnenraum 51. In diesem Scheibeninnenraum herrscht ein gegenüber der Umgebung des Fensters unterschiedlicher Druck, der ein Überdruck oder Unterdruck sein kann.

Der Scheibeninnenraum 51 ist über eine oder mehrere Öffnungen 6 mit einer Sensoreinrichtung 57, welche eine Betätigungseinrichtung für eine nicht näher dargestellte Alarm- und/oder Signalvorrichtung zum Auslösen eines Alarms oder Signals aufweist, und z. B. gemäß den Ausführungsbeispielen nach den Figuren 1 bis 3 ausgebildet ist, verbunden. Der Alarm oder das Signal wird dann ausgelöst, wenn im Scheibeninnenraum 51 eine Druckänderung stattfindet, beispielsweise bei Beschädigung einer der Scheiben 54 oder des Scheibenverbindungsrahmens 53. Die Verbindung zwischen dem Scheibeninnenraum 51 und der Sensoreinrichtung 57 über die Öffnung 56 ist gasdicht.

Damit die Öffnung 56 oder mehrere derartige Öffnungen 56 im Scheibenverbindungsrahmen 53 von außen her nicht erkennbar sind und auch nach Beschädigung der Scheiben 54 innerhalb relativ kurzer Zeit nicht verstopft werden kann bzw. können, ist eine Abdeckschiene 52 vorgesehen, welche beim dargestellten Ausführungsbeispiel Langlöcher 50 aufweist. Diese Langlöcher 50 können naturlich auch als Rundlöcher oder sonstwie ausgebildet sein. Ferner besitzt beim dargestellten Ausführungsbeispiel die Abdeckschiene 52 von den beiden Scheiben 54 einen Abstand. Es ist auch möglich, entweder die Abdeckschiene 52 ohne Lochung auszubilden und nur den Abstand zu den Scheiben 54 zu belassen oder die Abdeckschiene 52 mit Löchern zu versehen und die Ränder der Abdeckschiene 52 an den Scheiben 54 ohne Abstand anstoßen zu lassen. Die Abdeckschiene 52 besitzt außerdem einen Abstand gegenüber der umlaufenden Innenfläche des Scheibenverbindungsrahmens 53. Dieser Abstand kann beispielsweise durch Abstandhalter 58 gewährleistet sein. Es sind auch andere abstandhaltende Mittel möglich, beispielsweise können die Scheiben 54 Auflageschultern besitzen, auf denen die Abdeckschiene 52, welche mit Löchern versehen ist, aufliegt. Auch am Scheibenverbindungsrahmen kann eine Auflageschulter vorgesehen sein.

Bei dem in den Figuren 8 und 10 dargestellten Ausführungsbeispiel wird anstelle der Abdeckschiene 52 ein Rohr 55 verwendet, das ebenfalls mit Löchern 50 versehen ist. Dieses Rohr 55 ist über eine durch den Scheibenverbindungsrahmen 53 ragende Gasleitung 49 mit der Sensoreinrichtung 57 für die nicht näher dargestellte Alarm- und/oder Signalvorrichtung verbunden.

Bei den dargestellten Ausführungsbeispielen wird eine Druckänderung im Scheibeninnenraum ungehindert auf die Sensoreinrichtung 57 durch die Öffnung 56 bzw. Luftleitung 49 übertragen, wobei gleichzeitig, wie schon erwähnt, nicht erkennbar ist, an welcher Stelle die Luftleitung 49 bzw. Öffnung 56 im Scheibenverbindungsrahmen liegt. Man kann daher mit relativ geringem Über- oder Unterdruck im Scheibeninnenraum auskommen.

## Patentansprüche

1. Druckempfindliche Sensoreinrichtung für einen Alarmsignalgeber mit einem auf Druckänderung reagierenden Körper, insbesondere einer Membran, durch den bzw. die zur Abgabe eines Alarmsignals ein beweglicher Kontakt (2; 2') auf einen feststehenden Kontakt (3 oder 4; 3' oder 4') eines ersten elektrischen Kontaktgebers (2, 3, 4; 2', 3', 4') bewegt wird und mit einem in einem Gehäuse (1) angeordneten luftdichten Druckraum (5, 6), der an einem zu überwachenden, einen vorbestimmten Gasdruck aufweisenden Raum (17), z. B. einen Scheibeninnenraum (51) zwischen Doppelscheiben (54, 54) eines Fensters angeschlossen ist, wobei der erste Kontaktgeber (2, 3, 4; 2', 3', 4') derart im Druckraum (5, 6) angeordnet ist, daß der bewegliche Kontakt (2; 2') durch eine geringe Druckänderung im Druckraum an einen seiner feststehenden Kontakte (3, 4; 3', 4') andrückbar ist, und wobei der Druckraum (5, 6) durch ein den beweglichen Kontakt (2; 2') des ersten Kontaktgebers (2, 3, 4; 2', 3', 4') betätigendes Trennelement in zwei Druckkammern (5 und 6) unterteilt ist und der Anschluß an den zu überwachenden Raum (17) in eine der beiden Druckkammern (5, 6) mündet, dadurch gekennzeichnet, daß
- ein beweglicher Kontakt (12) eines zweiten Kontaktgebers (12, 13, 14) durch eine den Druckraum (5, 6) nach außen luftdicht abschließende, auf Druckänderungen im Druckraum reagierende Membran (11) auf einen feststehenden Kontakt (13 oder 14) des zweiten Kontaktgebers (12, 13, 14) zu bewegbar ist, und - eine Einrichtung vorgesehen ist, die zwischen den beiden Druckkammern (5 und 6) einen allmählichen Druckausgleich ermöglicht.

2. Sensoreinrichtung nach Anspruch 1, dadurch gekennzeichnet, daß die Trennmembran (7) aus einem nur einen allmählichen Gasdurchtritt ermöglichenden Material besteht.

3. Sensoreinrichtung nach Anspruch 1, dadurch gekennzeichnet, daß der bewegliche Kontakt (2') des ersten Kontaktgebers (2', 3', 4') in einer seiner Umrißform angepaßten kanalförmigen Kontaktführung (9), die einseitig gegenüber dem übrigen Druckraum (5, 6) luftdicht verschlossen ist, und in die wenigstens ein fester Kontakt (3', 4') ragt, im Druckraum (5, 6) geführt ist und daß zwischen der Innenwand der kanalförmigen Kontaktführung (9) und dem Umfang des beweglichen Kontaktes (2') ein den allmählichen Druckausgleich ermöglichender Spalt (51) vorhanden ist.

4. Sensoreinrichtung nach Anspruch 1 oder 3, dadurch gekennzeichnet, daß der bewegliche Kontakt (2') des ersten Kontaktgebers (2', 3', 4') als Rollkörper (z. B. kugelförmig oder walzenförmig) ausgebildet ist.

5. Sensoreinrichtung nach Anspruch 3, dadurch gekennzeichnet, daß die kanalförmige Führung (9) für den beweglichen Kontakt (2') gebogen ausgebildet ist, wobei die tiefste Stelle der Biegung in horizontalem Abstand von dem festen Kontakt bzw. zwischen zwei festen Kontakten (3', 4') des ersten Kontaktgebers (2', 3', 4') liegt.

6. Sensoreinrichtung nach Anspruch 1 und 3, dadurch gekennzeichnet, daß der Anschluß (Anschlußstutzen 8) an den zu überwachenden Raum (17) in den gegenüber dem übrigen Druckraum (5, 6) luftdicht abgeschlossenem Kanalraum (Druckkammer 6) der kanalförmigen Kontaktführung (9) mündet.

7. Sensoreinrichtung nach einem der Ansprüche 1 bis 6, dadurch gekennzeichnet, daß zwischen den beiden Druckkammern (5 und 6) ein die luftdicht ausgebildete Trennmembran (7) bzw. den beweglichen Kontakt (2') überbrückender Druckausgleich vorgesehen ist.

8. Sensoreinrichtung nach Anspruch 1 oder 2, dadurch gekennzeichnet, daß der Anschluß (Anschlußstutzen 8) für den zu überwachenden Raum (17) in die Druckkammer (6) mündet, die sowohl von der den Druckraum zumindest teilweise abdeckenden Membran (11) und der Trennmembran (7) begrenzt ist.

9. Sensoreinrichtung nach Anspruch 1, dadurch kekennzeichnet, daß der bewegliche Kontakt (12) des zweiten Kontaktgebers (12, 13, 14) außerhalb des Druckraums (5, 6) liegt.

10. Sensoreinrichtung nach Anspruch 1, dadurch gekennzeichnet, daß der andere (5) der beiden Druckräume (5, 6) an ein Gasreservoir (16) angeschlossen ist, (Anschlußstutzen 52), das über ein Sperrventil (15) an den zu überwachenden Raum (17) anschließbar ist.

11. Sensoreinrichtung nach Anspruch 10, dadurch gekennzeichnet, daß durch das Sperrventil (15) ein Gasreservoir (16) vom zu überwachenden Raum (17) und der einen (6) der beiden Druckkammern (5, 6) abtrennbar ist.

12. Sensoreinrichtung nach Anspruch 7 und 10 oder 11, dadurch gekennzeichnet, daß das Sperrventil (15) den Druckausgleichskanal für den allmählichen Druckausgleich zwischen den beiden Druckkammern (5, 6) aufweist.

13. Sensoreinrichtung nach Anspruch 10, dadurch gekennzeichnet, daß das Gasreservoir (16) getrocknetes Gas (Luft) autweist.

14. Sensoreinrichtung nach Anspruch 13, dadurch gekennzeichnet, daß das als Sack ausgebildete Gasreservoir (16) in einem Druckbehälter (25) angeordnet ist, dessen Druck über ein Steuerventil (26) einstellbar ist, so daß eine gesteuerte Gasabgabe bzw. -entnahme in den bzw. aus dem zu überwachenden Raum (17) sowie in die bzw. aus der Druckkammer (5, 6) erzielbar ist.

15. Sensoreinrichtung nach Anspruch 14, dadurch gekennzeichnet, daß die Druckeinstellung im Druckbehälter (25) über ein in den Druckbehälter (25) ragendes gelochtes Rohr (27) erfolgt.

16. Sensoreinrichtung nach Anspruch 9, dadurch gekennzeichnet, daß die im Betrieb feststehenden Kontakte (13, 14) des zweiten Kontaktgebers (12, 13, 14) zur Empfindlichkeitseinstellung verstellbar sind.

17. Sensoreinrichtung nach Anspruch 1, dadurch gekennzeichnet, daß die im Betrieb feststehenden Kontakte (3, 4) des ersten Kontaktgebers (2, 3, 4) zur Empfindlichkeitseinstellung verstellbar sind.

18. Sensoreinrichtung nach Anspruch 17, dadurch gekennzeichnet, daß jeder der beiden feststehenden Kontakte (3, 4) ein Innengewinde (35) aufweist, das auf dem Gewinde einer außerhalb des Gehäuses (1) betätigbaren Verstellschraube (28, 29) zur Verschiebung des jeweiligen Kontaktes (3, 4) in axialer Richtung der jeweiligen Verstellschraube (28, 29) sitzt.

19. Sensoreinrichtung nach Anspruch 17 oder 18, dadurch gekennzeichnet, daß die feststehenden Kontakte (3, 4) als L-förmige Streifenkontakte ausgebildet sind, deren eine Schenkel zur Kontaktgabe Kontaktschenkel (30, 31) und deren andere Schenkel Führungsschenkel (32, 33) sind, welche jeweils das Innengewinde (35) und eine Führungsbohrung (34), durch die die jeweils andere zur Verstellung des anderen Kontaktes dienende Verstellschraube (28 bzw. 29) ohne Gewindeeingriff ragt, ausgebildet sind.

20. Sensoreinrichtung nach Anspruch 1, dadurch gekennzeichnet, daß die beiden Membranen (7, 11) jeweils mittels einer Membranhalterung (36, 37) auswechselbar in das Gehäuse (1) einsetzbar sind.

21. Sensoreinrichtung nach Anspruch 20, dadurch gekennzeichnet, daß die Membranhalterungen (36, 37) ringförmig ausgebildet sind und Außengewinde (38, 39) aufweisen, die in entsprechenden Innengewinden (40, 41) des Gehäuses (1) einschraubbar sind.

22. Sensoreinrichtung nach Anspruch 1, dadurch gekennzeichnet, daß das Gehäuse (1) mit einem Deckel (42) verschließbar ist, der mittels eines am Gehäuse (1) angreifenden Klemmbügels (43) luftdicht auf das Gehäuse (1) aufgesetzt ist.

23. Sensoreinrichtung zur Sicherung eines Mehrscheibenfensters, insbesondere Doppelscheibenfensters, in dessen Scheibeninnenraum (51) zwischen den Scheiben ein zur Umgebung unterschiedlicher Druck (Unterdruck, Überdruck) herrscht, bei dem der Scheibeninnenraum (51) mit einer Betätigungseinrichtung für eine Alarm- und/oder Signalvorrichtung zum Auslösen eines Alarms oder Signals, wenn im Scheibeninnenraum (51) eine Druckänderung stattfindet, über eine oder mehrere Öffnungen in einem gasdichten Scheibenverbindungsrahmen für die dem Scheibeninnenraum einschließenden Scheiben (54, 54) gasdicht verbunden ist, dadurch gekennzeichnet, daß sich im Scheibeninnenraum (51) entlang dem Scheibenverbindungsrahmen (53) im Abstand zu diesem eine Abdeckschiene (52) erstreckt, deren Seitenkanten einen Abstand zu den Scheiben und/oder die mehrere Öffnungen (50) aufweist.

24. Sensoreinrichtung nach Anspruch 23, dadurch gekennzeichnet, daß die Abdeckschiene ausgebildet ist als den Scheibeninnenraum (51) umfassendes gelochtes Rohr (55), das über eine oder mehrere Gasleitungen (49) mit der Betätigungseinrichtung (57) verbunden ist.

## Claims

1. A pressure-sensitive sensor device for an alarm signalling apparatus comprising a member which reacts to a change in pressure, in particular a diaphragm, by means of which, to produce an alarm signal, a movable contact (2, 2') is moved to a fixed contact (3 or 4; 3' or 4') of a first electrical contact making means (2, 3, 4; 2', 3', 4'), and an air-tight pressure chamber (5, 6) which is disposed in a housing (1) and which is connected to a space (17) which is to be monitored and which has a predetermined gas pressure, for example a cavity (51) between the double panes (54, 54) of a window, wherein the first contact making means (2, 3, 4; 2', 3', 4') is so arranged in the pressure chamber (5, 6) that the movable contact (2; 2') can be pressed against one of its fixed contacts (3, 4; 3', 4') by a slight change in pressure in the pressure chamber, and wherein the pressure chamber (5, 6) is subdivided into two pressure chamber portions (5 and 6) by a separating element which actuates the movable contact (2; 2') of the first contact making means (2, 3, 4; 2', 3', 4'), and the connection to the space (17) to be monitored communicates with one of the two pressure chamber portions (5, 6), characterised in that

- a movable contact (12) of a second contact making means (12, 13, 14) is movable towards a fixed contact (13 or 14) of the second contact making means (12, 13, 14) by a diaphragm (11) which closes off the pressure chamber (5, 6) relative to the exterior in an air-tight manner and which reacts to changes in pressure in the pressure chamber, and

- there is provided a means to permit a gradual equalisation of pressure between the two pressure chamber portions (5 and 6).

2. A sensor device according to claim 1 characterised in that the separating diaphragm (7) comprises a material which only gradually permits gas to pass therethrough.

3. A sensor device according to claim 1 characterised in that the movable contact (2') of the first contact making means (2', 3', 4') is guided in the pressure chamber (5, 6) in a passage-like contact guide means (9) which is adapted to the outer contour of the movable contact and which is air-tightly closed at one end relative to the remainder of the pressure chamber (5, 6) and into which projects at least one fixed contact (3', 4'), and that provided between the inside wall of the passage-like contact guide means (9) and the periphery of the movable contact (2') is a gap (51) which permits a gradual equalisation of pressure.

4. A sensor device according to claim 1 or claim 3 characterised in that the movable contact (2') of the first contact-making means (2', 3', 4') is in the form of a rolling tody (for example in the form of a ball or a roller).

5. A sensor device according to claim 3 characterised in that the passage-like guide means (9) for the movable contact (2') is of a curved configuration, wherein the lowest point of the curvature lies at a horizontal spacing from the fixed contact or between two fixed contacts (3', 4') of the first contact making means (2', 3', 4').

6. A sensor device according to claim 1 and claim 3 characterised in that the connection (connecting portion 8) to the space (17) to be monitored communicates with the passage space (pressure chamber portion 6) of the passage-like contact guide means (9), said passage space being air-tightly closed off relative to the remainder of the pressure chamber (5, 6).

7. A sensor device according to one of claims 1 to 6 characterised in that provided between the two pressure chamber portions (5 and 6) is a pressure equilisation means for by-passing the air-tight separating diaphragm (7) or the movable contact (2').

8. A sensor device according to claim 1 or claim 2 characterised in that the connection (connecting portion 8) for the space (17) to be monitored communicates with the pressure chamber portion (6) which is delimited both by the diaphram (11) which at least partially covers over the pressure chamber, and the separating diaphram (7).

9. A sensor device according to claim 1 characterised in that the movable contact (12) of the second contact making means (12, 13, 14) lies outside the pressure chamber (5, 6).

10. A sensor device according to claim 1 characterised in that the other (5) of the two pressure chambers (5, 6) is connected to a gas reservoir (16) (connecting portion 52) which can be connected by way of a check valve (15) to the space (17) to be monitored.

11. A sensor device according to claim 10 characterised in that a gas reservoir (16) can be separated by the check valve (15) from the space (17) to be monitored and one (6) of the two pressure chamber portions (5, 6).

12. A sensor device according to claim 7 and claim 10 or claim 11 characterised in that the check valve (15) has the pressure equalisation passage for the gradual equalisation of pressure between the two pressure chamber portions (5, 6).

13. A sensor device according to claim 10 characterised in that the gas reservoir (16) has dried gas (air).

14. A sensor device according to claim 13 characterised in that the gas reservoir (16) which is in the form of a bag is arranged in a pressure container (25) whose pressure is adjustable by way of a control valve (26) so that it is possible to achieve controlled delivery or removal of gas into or out of the space (17) to be monitored and into and out of the pressure chamber (5, 6).

15. A sensor device according to claim 14 characterised in that adjustment of the pressure in the pressure container (25) is effected by way of an apertured pipe (27) which projects into the pressure container (25).

16. A sensor device according to claim 9 characterised in that the contacts (13, 14) which in operation are stationary, of the second contact making means (12, 13, 14) are adjustable for sensitivity adjustment.

17. A sensor device according to claim 9 characterised in that the contacts (13, 14) which in operation are stationary, of the first contact means (2, 3, 4) are adjustable for sensitivity adjustment.

18. A sensor device according to claim 17 characterised in that each of the two fixed contacts (3, 4) has a female screwthread (35) which is carried on the screwthread of an adjusting screw (28, 29) actuable from outside the housing (1) for displacement of the respective contact (3, 4) in the axial direction of the respective adjusting screw (28, 29).

19. A sensor device according to claim 17 or claim 18 characterised in that the fixed contacts (3, 4) are in the form of L-shaped strip contacts wherein the one limbs thereof are contact limbs (30, 31) for contact making and other limbs are guide limbs (32, 33) which respectively have the female screwthread (35) and a guide bore (34), through which bore the respective other adjusting screw (28 or 29) serving for adjustment of the other contact projects without screwthread engagement.

20. A sensor device according to claim 1 characterised in that the two diaphragms (7, 11) can each be replaceably fitted into the housing (1) by means of a respective diaphragm holding means (36, 37).

21. A sensor device according to claim 20 characterised in that the diaphragm holding means (36, 37) are of an annular configuration and have male screwthreads (38, 39) which can be screwed into corresponding female screwthreads (40, 41) of the housing (1).

22. A sensor device according to claim 1 characterised in that the housing (1) can be closed by a cover (42) which is air-tightly fitted on to the housing (1) by means of a clamping bracket (43) which engages the housing (1).

23. A sensor device for safeguarding a multiple-glazed window, in particular a double-glazed window, in the cavity (51) of which, between the panes, there obtains a pressure which is different from the surrounding area (reduced pressure, increased pressure), wherein the cavity (51) between the panes is gas-tightly connected to an actuating means for an alarm and/or signalling apparatus for triggering off an alarm or signal when a change in pressure occurs in the cavity (51), by way of one or more openings in a gas-tight pane connecting frame for the panes (54, 54) which enclose said cavity, characterised in that a masking rail (52) extends in the cavity (51) along the pane connecting frame (53) at a spacing therefrom, the side edges of said masking rail being at a spacing from the panes and/or the masking rail having a plurality of openings (50).

24. A sensor device according to claim 23 characterised in that the masking rail is in the form of an apertured tube (55) which extends around the cavity (51) and which is connected to the actuating device (57) by way of one or more gas conduits (49).

**Revendications**

1. Dispositif détecteur sensible à la pression pour un générateur de signaux d'alarme comportant un corps, notamment une membrane, réagissant à un changement de pression, grâce auquel, ou à laquelle, pour émettre un signal d'alarme, un contact mobile (2, 2') est déplacé sur un contact fixe (3 ou 4 ; 3' ou 4') d'un premier contacteur électrique (2, 3, 4 ; 2', 3', 4'), et une chambre de pression (5, 6), étanche à l'air et disposée dans un boîtier (1), laquelle est reliée à un volume à surveiller (17) présentant une pression prédéterminée, par exemple le volume intérieur (51) entre les vitres doubles (54, 54) d'une fenêtre, dispositif dans lequel le premier contacteur (2, 3, 4 ; 2', 3', 4') est disposé dans la chambre de pression (5, 6) de telle sorte que le contact mobile (2 ; 2') peut être appliqué par une faible variation de pression dans la chambre de pression (5, 6) contre l'un de ses contacts fixes (3, 4 ; 3', 4'), et la chambre de pression (5, 6) est divisée en deux chambres de pression (5 et 6) par un élément de séparation actionnant le contact mobile (2 ; 2') du premier contacteur (2, 3, 4, ; 2', 3', 4') et le raccordement au volume (17) à surveiller débouche dans l'une des deux chambres de pression (5, 6), caractérisé en ce que

- un contact mobile (12) d'un second contacteur (12, 13, 14) peut être déplacé sur un contact fixe (13 ou 14) du second contacteur (12, 13, 14) par une membrane (11) fermant hermétiquement la chambre de pression (5, 6) vers l'extérieur et réagissant aux variations de pression dans la chambre de pression, et

- on prévoit un dispositif qui permet un équilibrage de pressions progressif entre les deux chambres de pression (5, 6).

2. Dispositif détecteur selon la revendication 1, caractérisé en ce que la membrane de séparation (7) est en un matériau qui ne permet qu'un passage progressif du gaz.

3. Dispositif détecteur selon la revendication 1, caractérisé en ce que le contact mobile (2') du premier contacteur (2', 3', 4') est guidé dans la chambre de pression (5, 6) dans un guidage de contact (9) en forme de conduit adapté à son contour, qui est fermé d'un côté de façon étanche à l'air par rapport au reste de la chambre de pression (5, 6), et dans lequel saille au moins un contact fixe (3', 4'), et en ce qu'il y a entre la paroi intérieure du guidage de contact en forme de conduit (9) et la périphérie du contact mobile (2') un intervalle (51) permettant l'équilibrage progressif de la pression.

4. Dispositif détecteur selon la revendication 1 ou 3, caractérisé en ce que le contact mobile (2') du premier contacteur (2', 3', 4') est réalisé sous forme de corps roulant (par exemple en forme de bille ou de rouleau).

5. Dispositif détecteur selon la revendication 3, caractérisé en ce que le guidage (9) en forme de conduit pour le contact mobile (2') est incurvé et le point le plus bas de la courbe est à une distance horizontale du contact fixe, ou entre deux contacts fixes (3', 4') du premier contacteur (2', 3', 4').

6. Dispositif détecteur selon les revendications 1 et 3, caractérisé en ce que le raccordement (embout de raccordement 8) au volume (17) à surveiller débouche dans le volume de conduit (chambre de pression 6) du guidage de contact (9) en forme de conduit fermé de façon étanche à l'air par rapport au reste de la chambre de pression (5, 6).

7. Dispositif détecteur selon l'une des revendications 1 à 6, caractérisé en ce qu'on prévoit entre les deux chambres de pression (5 et 6) un équilibrage de pression court-circuitant la membrane (7) étanche à l'air ou le contact mobile (2').

8. Dispositif détecteur selon la revendication 1 ou 2, caractérisé en ce que le raccordement (embout de raccordement 8) pour le volume (17) à surveiller débouche dans la chambre de pression (6) qui est délimitée par la membrane (11) recouvrant la chambre de pression au moins partiellement et par la membrane de séparation (7).

9. Dispositif détecteur selon la revendication 1, caractérisé en ce que le contact mobile (12) du second contacteur (12, 13, 14) se trouve à l'extérieur de la chambre de pression (5, 6).

10. Dispositif détecteur selon la revendication 1, caractérisé en ce que l'autre (5) des chambres de pression (5, 6) est reliée à un réservoir de gaz (16) (embout de raccordement 52), qui peut être relié par un clapet (15) au volume à surveiller (17).

11. Dispositif détecteur selon la revendication 10, caractérisé en ce qu'on peut séparer à l'aide du clapet (15) un réservoir de gaz (16) du volume (17) à surveiller et de l'une (6) des deux chambres de pression (5, 6).

12. Dispositif détecteur selon les revendications 7 et 10 ou 11, caractérisé en ce que le clapet (15) comporte le conduit d'équilibrage de pression pour l'équilibrage de pression progressif entre les deux chambres de pression (5, 6).

13. Dispositif détecteur selon la revendication 10, caractérisé en ce que le réservoir de gaz (16) contient un gaz séché (air).

14. Dispositif détecteur selon la revendication 13, caractérisé en ce que le réservoir de gaz (16) réalisé sous forme de sac est disposé dans un récipient sous pression (25), dont la pression peut être réglée à l'aide d'un clapet de commande (26), de sorte qu'on peut commander l'envoi de gaz dans le volume (17) à surveiller ainsi que dans la chambre de pression (5, 6), ou le retrait du gaz de ce volume et de cette chambre de pression.

15. Dispositif détecteur selon la revendication 14, caractérisé en ce que le réglage de la pression dans le récipient sous pression (25) s'effectue par l'intermédiaire d'un tube perforé (27) saillant dans le récipient sous pression (25).

16. Dispositif détecteur selon la revendication 9, caractérisé en ce qu'on peut régler la sensibilité des contacts fixes en fonctionnement (13, 14) du second contacteur (12, 13, 14).

17. Dispositif détecteur selon la revendication 1, caractérisé en ce qu'on peut régler la sensibilité des contacts fixes en fonctionnement (3, 4) du premier contacteur (2, 3, 4).

18. Dispositif détecteur selon la revendication 17, caractérisé en ce que chacun des deux contacts fixes (3, 4) comporte un filetage intérieur (35) qui coopère avec le filetage d'une vis de réglage (28, 29) pouvant être actionnée à l'extérieur du boîtier (1) pour déplacer le contact correspondant (3, 4) dans le sens axial de la vis de réglage correspondante (28, 29).

19. Dispositif détecteur selon la revendication 17 ou 18, caractérisé en ce que les contacts fixes (3, 4) sont réalisés sous la forme de bandes de contact en forme de L, dont une branche est une branche de contact (30, 31) pour établir le contact et l'autre branche est une branche de guidage (32, 33) portant respectivement le filetage intérieur (35) et un alésage de guidage (34) par lequel saille, sans venir en prise avec le filtrage, l'autre vis de réglage (28 ou 29) servant au réglage de l'autre contact.

20. Dispositif détecteur selon la revendication 1, caractérisé en ce que les deux membranes (7, 11) sont respectivement montées dans le boîtier (1) au moyen d'un support de membrane (36, 37) de façon à pouvoir être remplacées.

21. Dispositif détecteur selon la revendication 20, caractérisé en ce que les supports de membranes (36, 37) sont en forme d'anneaux et présentent des filetages extérieurs (38, 39), qui peuvent être vissés dans des filetages intérieurs correspondants (40, 41) du boîtier (1).

22. Dispositif détecteur selon la revendication 1, caractérisé en ce que le boîtier (1) peut être fermé par un couvercle (42) qui est placé de façon étanche à l'air sur le boîtier (1) au moyen d'un étrier de serrage (43) qui se fixe sur le boîtier (1).

23. Dispositif détecteur pour assurer la sécurité d'une fenêtre à plusieurs vitres, notamment d'une fenêtre à double vitre, dans le volume intérieur (51) de laquelle règne entre les vitres une pression différente de la pression environnante (depression, surpression), le volume intérieur (51) entre les vitres étant relié de façon étanche au gaz, par l'intermédiaire d'un ou de plusieurs orifices prévu dans un cadre étanche au gaz reliant les vitres (54, 54) enfermant entre elles le volume intérieur, avec un dispositif d'actionnement pour un dispositif d'alarme et/ou de signalisation pour déclencher une alarme ou un signal lorsqu'il se produit une variation de pression dans le volume intérieur (51) entre les vitres, caractérisé en ce qu'un rail de recouvrement (52) s'étend dans le volume intérieur entre vitres (51) le long du cadre de liaison des vitres (53) et à une certaine distance de celui-ci, les arêtes latérales de ce rail étant à une certaine distance des vitres et/ou comportant les multiples orifices (50).

24. Dispositif détecteur selon la revendication 23, caractérisé en ce que le rail de recouvrement est réalisé sous forme de tube perforé (55) enserrant le volume intérieur entre vitres (51), lequel tube est relié par un ou plusieurs conduits de gaz (49) au dispositif d'actionnement (57).

# FIG.1

# FIG:2

# FIG.3

# FIG.4

FIG. 5

FIG. 6

zu 5,6
und 17

0.134 476

FIG.7

FIG.9

FIG.8

FIG.10